# EUROPEAN PATENT APPLICATION

(11) **EP 2 351 632 A2**
(43) Date of publication of application: **03.08.2011**
(21) Application number: 09810171.0
(22) Date of filing: 24.08.2009
(51) Int. Cl.: B25J 5/00

(54) **LARGE RIDEABLE BIPEDAL WALKING ROBOT FOR USE AS AN AMUSEMENT PARK RIDE, AND AMUSEMENT PARK SYSTEM USING SAME**

(30) Priority: 23.08.2008 KR 20080082618
(71) Applicant: Kim, In-Sang, Kyunggi-Do 445-797 (KR)
(72) Inventor: Kim, In-Sang, Kyunggi-Do 445-797 (KR)
(74) Representative: Körber, Martin Hans
(86) International application number: PCT/KR2009/004706
(87) International publication number: WO 2010/024566

(57) **Abstract**

The present invention relates to a large bipedal walking robot that a human can directly board and ride and that may be used as an amusement park ride like a roller coaster, and to an amusement park system using the same. To this end, the amusement park system includes a large bipedal walking robot capable of being boarded and ridden; a boarding vehicle designed to be able to be coupled to the head or body of the robot; a safety cable and a safety rail part that prevent the robot from falling; a safety vehicle that prevents the robot, but not the safety cable, from falling and helps to make the robot's bipedal walking steadier; connection means that enables the robot to be connected to a roller coaster (tram railway) in order to provide the effect of a flying robot; a tunnel in which various villain robots are installed in order to provide the experience of the robot engaging in combat; and safety rails that are installed and connected in all areas where the robot moves.

## Description

### [Invention Title]

LARGE RIDEABLE BIPEDAL WALKING ROBOT FOR USE AS AMUSEMENT PARK RIDE AND AMUSEMENT PARK SYSTEM USING THE SAME

### [Technical Field]

The present invention relates to a large rideable bipedal walking robot that a human can directly board and ride and that can be utilized as an amusement park ride like a roller coaster, and a robot ride system for amusement parks using the large bipedal walking robot.

### [Background Art]

With the rapid advancement of computers, artificial intelligence technologies and control engineering have been developed to allow bipedal walking robots to gently walk and move. Especially, a humanoid robot like 'Asimo' made by Honda in Japan can run, and a robot like 'Hubo' made by Kaist in Korea can walk and move naturally.

As the robot technologies are generalized, further, robot kits with which bipedal walking robots are easily assembled and made like Lego blocks are supplied to general people and students. Also, various bipedal walking robot battle contests have been opened popularily.

Actually, however, the bipedal walking robots have been developed just as helpers that provide the conveniences in everyday life, that is, clean the house or carry coffee, so that the heights of the robots are less than 1m like a robot vacuum cleaner and the heights of the humanoid robots like 'Asimo' and 'Hubo' are less than 1.5m to 2m. Accordingly, the bipedal walking robots cannot be ridden and moved directly by the manipulation of the human like automobiles, trucks, fork cranes and so on.

In the meantime, large-sized humanoid bipedal walking robots like 'Robot Taekwon V' and 'Mazinger Z' appearing in SF movies or comic books have been not studied and developed at all up to now. The large bipedal walking robots have relatively low efficiencies in their movement and power when compared with four legs walking robots or large robots with wheels like a tank, thereby providing a low degree of practicability. As a result, many studies on the large bipedal walking robots have been not proposed.

However, such four legs walking robots or large robots with wheels look less friendly to humans when compared with the humanoid robots appearing in movies.

The present invention is thus suggested to a large rideable bipedal walking robot that humans can directly board and ride like amusement park rides, while adopting the walking technologies of existing humanoid robots having human-like sizes, and therefore, a large heavy equipment technology, that is, an actuator using hydraulic cylinders is needed. Accordingly, the invention can be a technology proposed for the first time in the world, which is completely different from the robot fields suggested conventionally.

### [Disclosure]

### [Technical Problem]

Accordingly, the present invention has been made in view of the above-mentioned problems occurring in the prior art, and it is an object of the present invention to provide a large bipedal walking robot that a human can directly board and ride and that can be utilized as an amusement park ride, wherein the bipedal walking robot is coupled to a ride like a roller coaster to provide new culture of amusement parks, thereby allowing riders to enjoy the riding and also allowing them to really experience the riding to satisfy their scientific imagination on the robot.

### [Technical Solution]

To accomplish the above object, according to an aspect of the present invention, there is provided a large bipedal walking robot that a human can directly board and ride and that can be utilized as an amusement park ride, the large bipedal walking robot including: a robot head having a space portion in which a boarding vehicle is mounted and coupled thereto; a safety rail part coupled to the robot by means of a safety cable; connection means adapted to connect a body of the robot to a roller coaster (a railway); and a tunnel for a theme park in which a variety of monster models and villain robots are installed to fight the robot, thereby allowing riders to have the real experiences therein.

According to the present invention, preferably, if it is hard to mount the safety cable, a safety vehicle is connected directly to the body of the robot and is moved together with robot, so as to ensure the stability of the two-legged walking of the robot.

At this time, the safety vehicle may include a special vehicle made by improving a fork crane and a rail type vehicle located on underground rails.

According to the present invention, also, the head of the robot has a speaker and headlights mounted thereon so as to provide an effect of talking to humans.

According to the present invention, especially, since degrees of excitement and trill are varied in accordance with the size of the large bipedal walking robot, the robot is provided in various sizes in accordance with the tendency and ages of the riders.

That is, in case of the robot for children, it has a height in a range of 1.5m to 3m, in case of the robot for family members including children, adults and old people, it has a height in a range of 3m to 7m is provided, in case of the robot for adults, it has a height in a range of 7m to 15m, and in case of the robot for adults having extreme interests in robots, it has a height greater than 15m.

### [Advantageous Effect]

According to the present invention, there is provided the large bipedal walking robot that the human can directly board and ride and that can be utilized as an amusement park ride, wherein the robot can walk, run and fly with the connection to various safety devices, thereby providing the effects of really experiencing the ride like a roller coaster and also providing entertainment effects obtained through the experience of beating villain robots.

Also, the scientific utilization value of the bipedal walking robot defined as helper robots cleaning house and carrying coffee is extended to amusement park rides providing visual fun and experiences in theme parks or travel famous places.

Therefore, the invention gives experiences of new rides to riders and provides chances of really seeing and directly boarding the large bipedal walking robots seen just in animations or SF movies, thereby improving imagination on the robots and growing their dream for science.

Further, users of the amusement park where the large bipedal walking robots are prepared can have more excitement and experiences through the special movements and grand sizes of the robots, which are not obtained in existing amusement park rides and roller coasters.

Additionally, the invention provides fun and theme different from existing amusement park rides to riders, thereby having differential advantages when compared with the existing amusement park rides and giving industrial attraction to the amusement park having the robot and ride system installed therein.

### [Description of Drawings]

FIG.1 is a front view showing a bipedal walking robot according to a preferred embodiment of the present invention.
FIG.2 is a side view showing the bipedal walking robot of FIG.1.
FIG.3 is a rear view showing the bipedal walking robot of FIG.1.
FIG.4 is a perspective view showing a boarding vehicle coupled to a body of the bipedal walking robot of FIG.1.
FIG.5 is a side view showing the coupling of the boarding vehicle of FIG.4 to the bipedal walking robot of FIG.1.
FIG.6 is an exemplary view showing a theme park composed of a walking road, a free riding road, a ride and/or a roller coaster, and a tunnel, along which the bipedal walking robot of FIG.1. is moved.
FIG.7 is an exemplary view showing a boarding area where a pilot and riders board the bipedal walking robot of FIG.1.
FIG.8 is a rear view showing a state where a safety rail part is connected by means of a safety cable to the bipedal walking robot of FIG.1.
FIG.9 is a side view showing a state where the bipedal walking robot of FIG.1. walks along the safety rails of the safety rail part.
FIG.10 is an exemplary view showing a state where a roller coaster is coupled to the bipedal walking robot of FIG.1.
FIG.11 is a front sectional view showing the coupled state of FIG 10.
FIG.12 is an exemplary view showing a state where the bipedal walking robot of FIG.1. hits a villain robot in the tunnel.
FIG.13 is a perspective view showing a bipedal walking robot coupled to a safety vehicle according to another embodiment of the present invention.
FIG.14 is a right side view showing the bipedal walking robot of FIG.13 and the safety vehicle.
FIG. 15 is a plan view showing the bipedal walking robot of FIG 13.
FIG.16 is an exemplary view showing the variations of the height of the bipedal walking robot of FIG.13 and the safety vehicle in accordance with the ages and tendency of the riders.
FIG.17 is an exemplary view showing a state where the safety vehicle of FIG.13 is positioned on underground rails.
FIG.18 is an exemplary view showing a state where the boarding space of the bipedal walking robot of FIG 1 is also formed in the robot body.
FIG.19 is an exemplary view showing an example where the bipedal walking robot of FIG.13 is coupled to the safety vehicle.

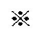 Explanation of essential reference numerals in drawings 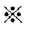

| | |
|---|---|
| 1: rideable bipedal walking robot | 2: head |
| 3: ann link | 4: upper body |
| 5: leg link | 6: safety cable connector |
| 7: roller coaster head connector | |
| 8: roller coaster upper body connector | |
| 9: entrance | 10: headlight |
| 11: speaker | 12: safety vehicle connector |
| 20: boarding vehicle | |
| 21: safety leg bar | 22: front insertion protrusion |
| 23: front insertion groove | |
| 24: back insertion groove connector | |
| 25: back insertion screw | 26: back insertion groove |
| 30: safety vehicle | 31: rail type safety vehicle |
| 100: robot walking road | 101: elevator |
| 102: lower entrance door | 103: upper entrance door |
| 150: robot free riding section | 200: roller coaster |
| 201: roller coaster support post | 210: head connection arm |
| 211: head connection arm fixing protrusion | |
| 212: head connection arm fixing nut | |
| 215: head connection arm rotating shaft | |
| 220: body connection arm | |
| 221: body connection arm fixing protrusion | |
| 222: body connection arm fixing nut | |
| 230: roller coaster moving vehicle | 231: roller coaster wheel |
| 232: roller coaster wheel shaft | 233: roller coaster rail |
| 234: connection arm connector | |
| 300: tunnel for theme park | |
| 310: villain robot for theme park | 500: safety rail |
| 501: safety rail support post | 502: safety cable part |
| 510A: upper rail | 510B: lower rail |
| 511: safety cable rotary shaft | |
| 512: safety rail moving wheel | |

The attached drawings and the embodiments are only for illustrative purposes and are not intended to limit the present invention.

### [Best Mode for Invention]

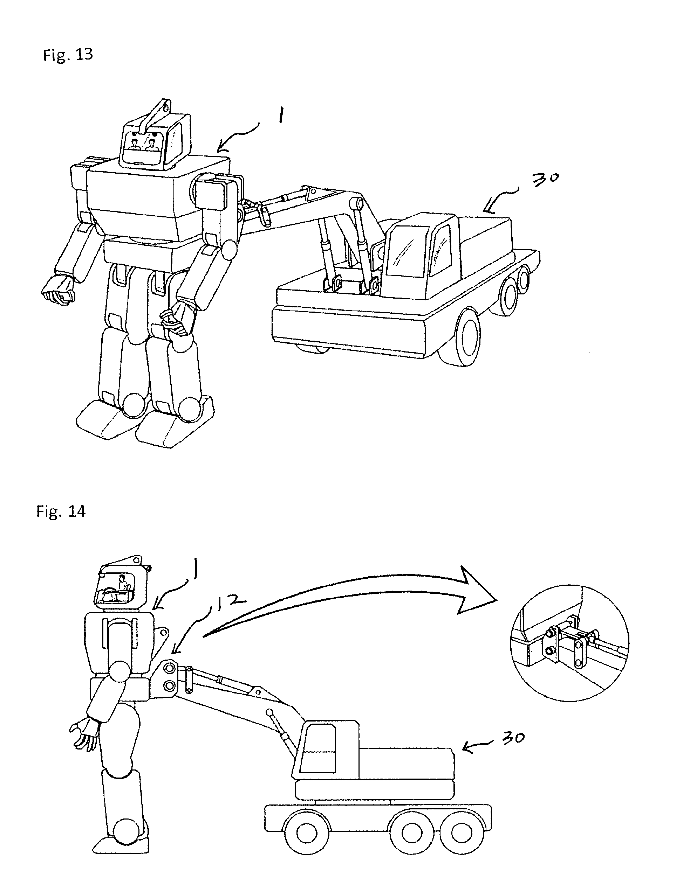

The present invention relates to a large bipedal walking robot that a human can directly board and ride and that can be utilized as an amusement park ride like a roller coaster, and a robot ride system of an amusement park using the large bipedal walking robot. According to the best embodiment of the present invention, the large bipedal walking robot is coupled to a safety vehicle, as shown in FIG.13, such that the robot can freely walk and run with the assistance of the safety vehicle, even in a place where a safety cable is not installed. For example, the large bipedal walking robot coupled to the safety vehicle can be ridden in playgrounds in cities as well as existing theme parks, which gives much fun to the riders.

Hereinafter, an explanation on a bipedal walking robot according to a preferred embodiment of the present invention will be in detail given with reference to the attached drawings.

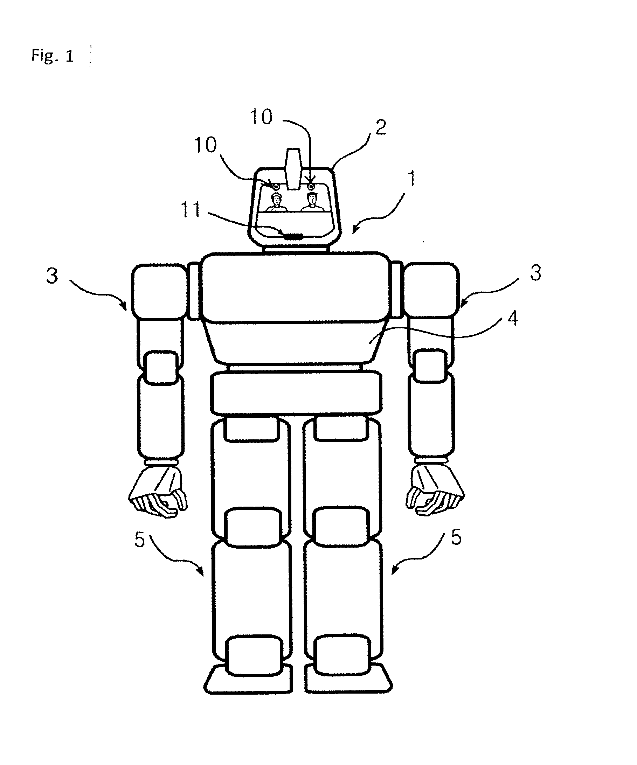

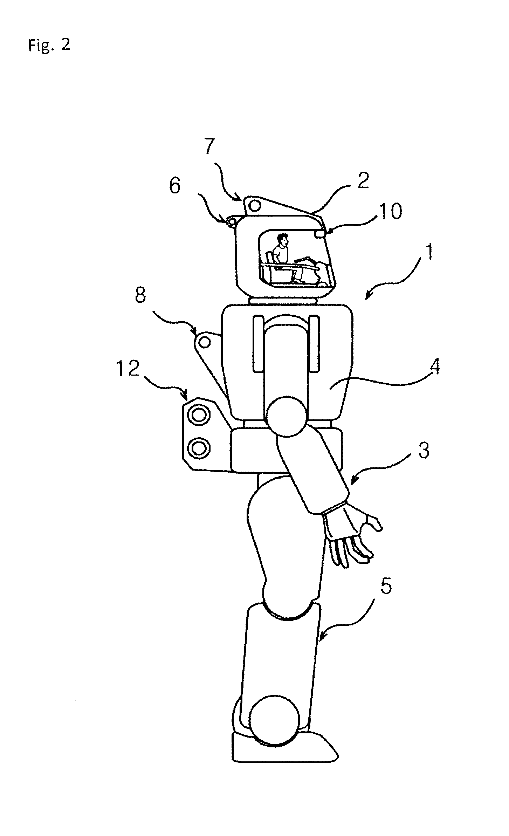

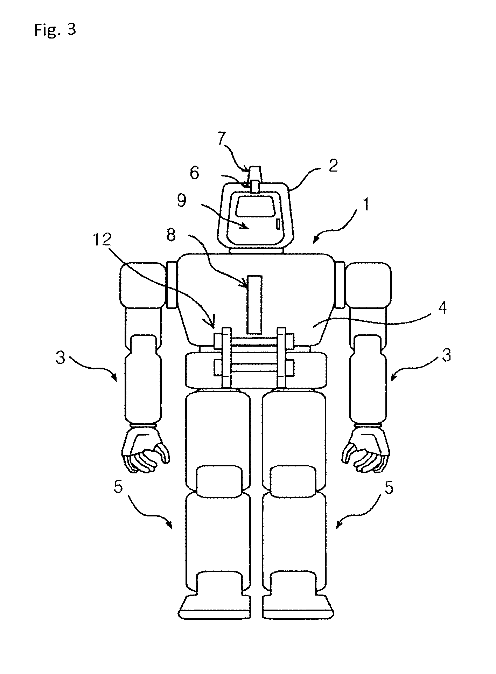

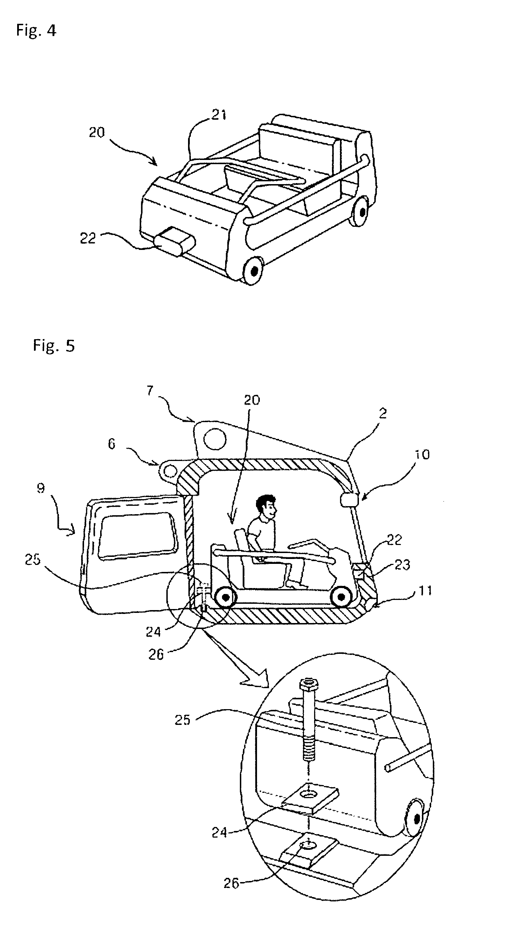

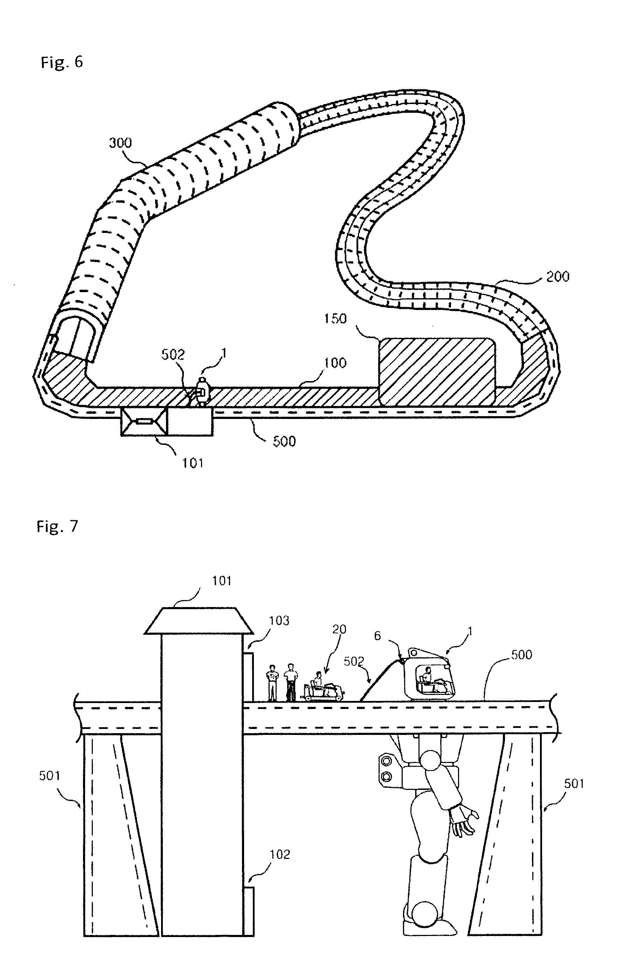

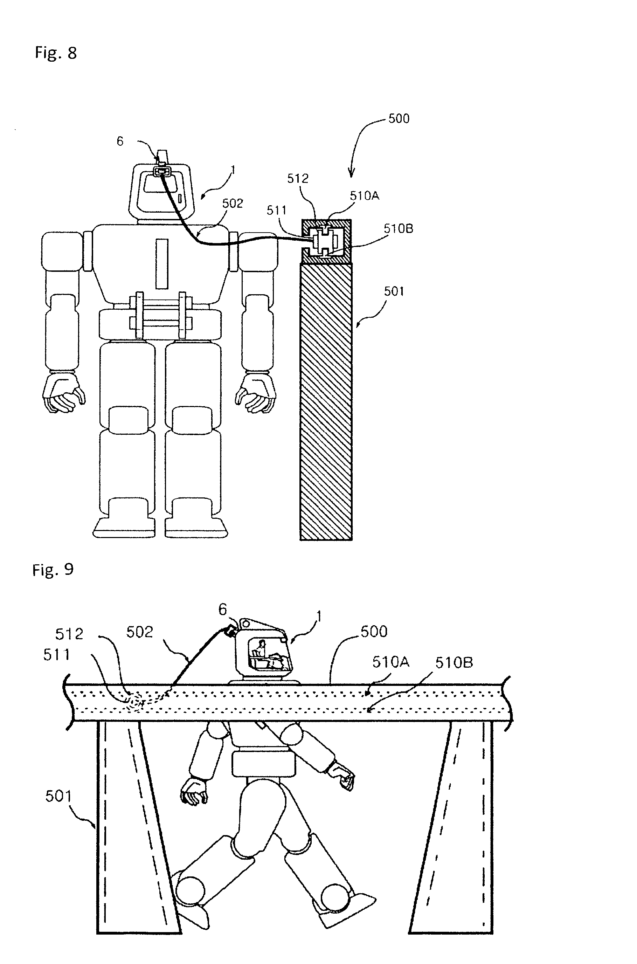

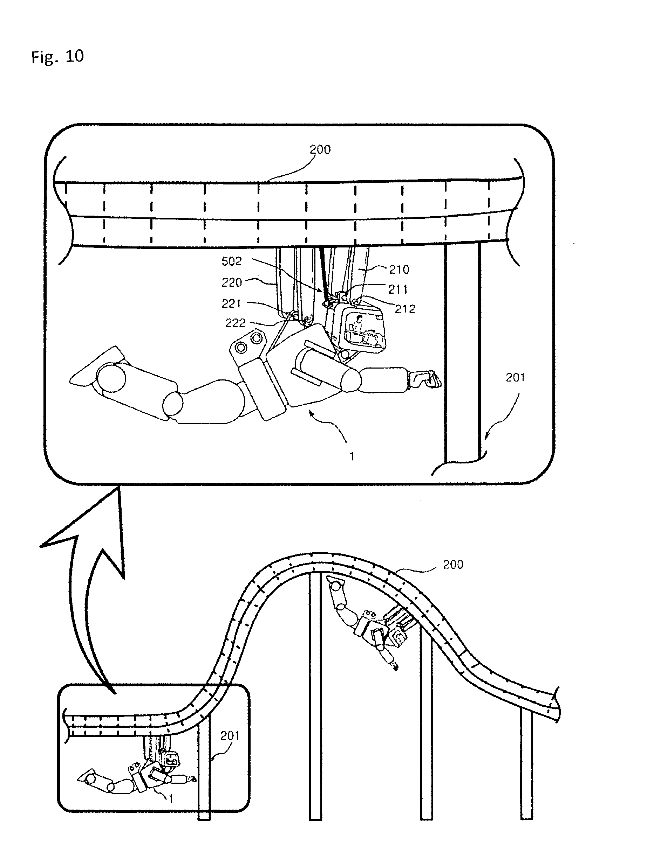

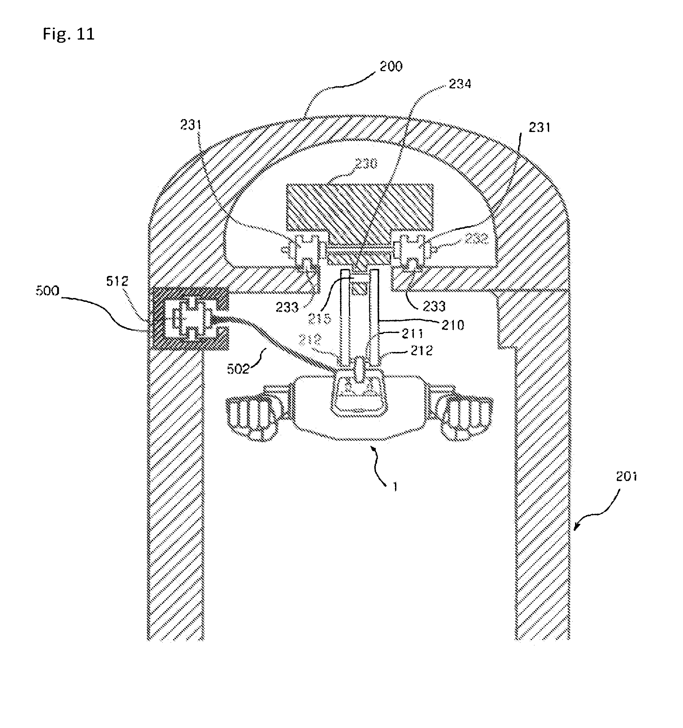

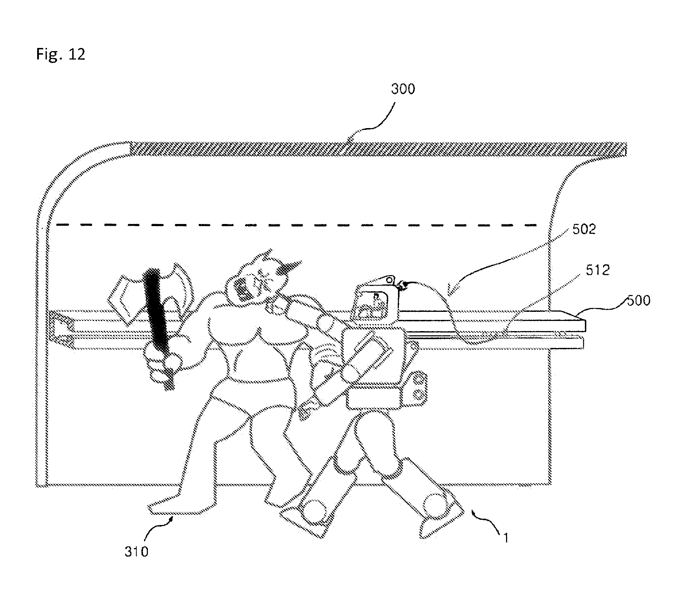

FIG.1 is a front view showing a large rideable bipedal walking robot for an amusement park ride (hereinafter referred simply to as 'robot') according to a preferred embodiment of the present invention, FIG.2 is a side view of the robot, FIG.3 is a rear view of the robot, FIG.4 is a perspective view showing a boarding vehicle coupled to a body of the robot, FIG.5 is a side view showing the coupling of the boarding vehicle of FIG.4 to the robot, FIG.6 is an exemplary view showing a theme park composed of a walking road, a free riding road, a ride and/or a roller coaster, and a tunnel, along which the robot is moved, FIG.7 is an exemplary view showing a boarding area where a pilot and riders board the robot, FIG.8 is a rear view showing a state where a safety rail part is connected by means of a safety cable to the robot, FIG.9 is a side view showing a state where the robot walks along the safety rails of the safety rail part, FIG.10 is an exemplary view showing a state where a roller coaster is coupled to the robot, FIG.11 is a front sectional view of FIG.10, and FIG.12 is an exemplary view showing a state where the robot hits a villain robot in the tunnel.

As shown in FIG.1, a robot 1 of the invention includes two leg links 5, an upper body 4 disposed on the top sides of the two leg links 5, a head 2 disposed on the top side of the upper body 4, and two arm links 3 connected to both sides of the upper body 4. The head 2 has two headlights 10 and a speaker 11 mounted thereon. In the interior of the upper body 4 are provided a control unit like a computer and an engine source (such as an engine, batteries, power supply equipment and so on) of a motor (driving source) activating the links of the robot 1, which are not shown in the drawings. Also, the robot 1 as shown in FIGS.1 to 3 has a cover mounted thereon so as to protect the internal structure thereof.

As shown in FIGS.2 and 3, the head 2 has a safety cable connector 6 adapted to connect a safety cable thereto and a head connector 7 adapted to connect a roller coaster thereto, and the upper body 4 has an upper body connector 8 adapted to connect the roller coaster thereto.

The walking technology of the robot 1 as shown in FIGS.1 to 3 is adopted from that of the humanoid robots conventionally known. For example, it can be adopted freely from the walking technologies of the Honda robot 'Asimo', Kaist robot 'Hubo', and various humanoid robots appearing in robot game contests.

Further, an explanation on the energy source and power housed in the upper body 4 of the robot 1 will be given.

The power of the large bipedal walking robot includes the energy sources used for existing large fork cranes, cranes and industrial robots. For instance, the power is utilized with oil energy like gas and diesel, fuel cells, electricity and so on, and further, it is utilized with hybrid energy. In the meantime, so as to convert the energy of the robot 1 into energy to move the arms, legs, head, and upper body, an electric motor, a hydraulic pump, a hydraulic motor, an actuator, and a hydraulic cylinder are utilized.

Referring to FIGS.4 and 5, an explanation on the coupling structure between the robot 1 and the boarding vehicle 20 will be given.

As shown, the boarding vehicle 20 has a front insertion protrusion 22 formed at the front surface thereof in such a manner as to be inserted into a front insertion groove 23 formed on the head 2 of the robot 1.

Also, the boarding vehicle 20 has a back insertion groove connector 24 mounted at the back surface thereof, and the head 2 of the robot 1 has a back insertion groove 26 formed thereon, such that the back insertion groove connector 24 and the back insertion groove 26 are fixed to each other by means of a back insertion screw 25, thereby allowing the boarding vehicle 20 to be rigidly fixed to the body of the robot 1.

Moreover, the boarding vehicle 20 has a safety leg bar 21 for helping riders and stewards to board the vehicle in safety.

Further, the head 2 of the robot 1 has an entrance door 9 formed to be opened and closed at the back surface thereof, through which the boarding vehicle 20 goes and comes. Of course, if the inside (of the head 2) of the robot 1 has a boarding space, seats and safety belts formed therein under the circumstances, it is possible to allow riders to directly board the boarding space of the robot 1, without using the boarding vehicle 20.

If the boarding vehicle 20 is coupled to the head 2 of the robot 1 or if the riders directly board the robot 1, the robot 1 is moved under the manipulation of a pilot of the robot 1. Of course, the robot 1 walks and moves by himself by utilizing his artificial intelligence or is controlled remotely in his movement. As the robot 1 walks, the riders can obtain new experiences, while seeing surrounding views, and when the robot 1 takes dynamic action of running or jumping, they can enjoy very exciting experiences.

Referring next to FIG.6, an explanation on the robot utilized as an amusement park ride will be given.

As shown, a variety of amusement park instruments are installed around the robot 1. For example, there is provided an amusement park system including a robot walking road 100 along which the robot 1 walks or runs, a robot free riding section 150 in which the robot 1 dances or takes various action, a roller coaster 200 to which the robot 1 is connected and flies, a tunnel 300 for theme parks adapted to provide a variety of theme experiences to the riders, and a boarding area and an elevator 101 connected to the boarding area.

Referring to FIG.7, an example of a boarding area prepared for the robot boarding of the pilot (or a steward) and riders is described.

The elevator 101 1 for the boarding area has a lower entrance door 102 and an upper entrance door 103 to permit people to reach easily the head 2 of the robot 1. After their arrival, they enter the head 2 of the robot 1 by using the boarding vehicle 20 or directly board the boarding space formed in the head 2 of the robot 1.

Referring next to FIGS.8 and 9, a system allowing the robot 1 to walk and operate safely will be described.

As noted above, the walking technologies of the bipedal walking robot have been brilliantly developed. However, since safety should be most importantly observed in amusement parks, there is a definite need for the installation of a device for preventing safety accidents to occur. As shown in FIG.8, the safety cable connector 6 is disposed on the back surface of the head 2 of the robot 1, to which a safety cable 502 is rigidly connected.

The safety cable 502 is connected to a safety rail moving wheel 512 by means of a safety cable rotary shaft 511 preventing the twisting of the safety cable 502. The safety rail moving wheel 512 is mounted at upper and lower rails 510A and 510B located on a safety rail part 500 and is moved naturally together with the movement of the robot 1. The safety rail part 500 is rigidly supported by means of safety rail support posts 501. The safety cable 502, which is made of a super strong material resisting the weight of the robot 1, is designed to such a length that it is possible to prevent the head 2 of the robot 1 from colliding directly against the ground. For instance, the safety cable 502 is designed to have the length obtained by subtracting the length (having two times of the head length of the robot) of the portion of the robot 1 to be protected from the height (from the ground) of the installation of the safety rail moving wheel 512, so that even though the robot 1 falls down, the head 2 of the robot 1 does not collide directly against the ground.

Referring to FIGS.10 and 11, next, a method of allowing the robot 1 coupled to a roller coaster to be moved safely will be explained.

A roller coaster 200 is safely fixed by means of roller coaster support posts 201. The roller coaster 200 has a roller coaster moving vehicle 230 provided thereon in such a manner as to be ascended and descended by the movement of roller coaster wheels 231 along roller coaster rails 233, thereby providing various riding. The roller coaster moving vehicle 230 has connection arm connectors 234 mounted at the lower end portion thereof in such a manner as to allow head and body connection arms 210 and 220 to be located thereon, and thus, the robot 1 is connected to the head and body connection arms 210 and 220 of the roller coaster 200. The head connection arm 210 is coupled to the head 2 of the robot 1 by means of a head connection arm fixing protrusion 211 and a head connection arm fixing nut 212. The body connection arm 220 is coupled to the upper body 4 of the robot 1 by means of a body connection arm fixing protrusion 221 and a body connection arm fixing nut 222. The robot 1 is coupled to the roller coaster 200 by means of the head connection ann 210 and the body connection ann 210, and thus, as the roller coaster moving vehicle 230 is moved, the robot 1 can fly in the sky, thereby providing exciting and safe flying to the riders.

Also, the roller coaster 200 has the safety rail 500 mounted thereon so as to provide another safety device for preventing safety accidents to occur.

Further, the coupling process of the robot 1 to the roller coaster 200 is carried out by directly connecting the head connection arm 210 and the body connection arm 220 to the head connector 7 and the upper body connector 8 by means of the arms and hands of the robot 1 utilizing his artificial intelligence, and alternatively, the coupling process can be carried out in a manually operating manner for the safety thereof. At this time, a safety supervisor should check or approve whether the connection is safely achieved.

Referring to FIG.12, next, an explanation on the experiences of the riders as the robot 1 is passed through the tunnel 300 for theme parks will be given.

Of course, the safety rail part 500 is installed along the tunnel 300 for theme parks so as to allow the robot 1 to walk and move safely. If a villain robot 310 that stands by or is installed in the tunnel 300 appears and takes action to threaten the robot 1, the robot 1 takes action to emit virtual laser to the villain robot 310 or hit him with his fist so as to drive the villain robot 310 away. At this time, if a variety of sound effects, illumination facilities, and video play are provided in the tunnel 300, more exciting experiences can be provided to the riders.

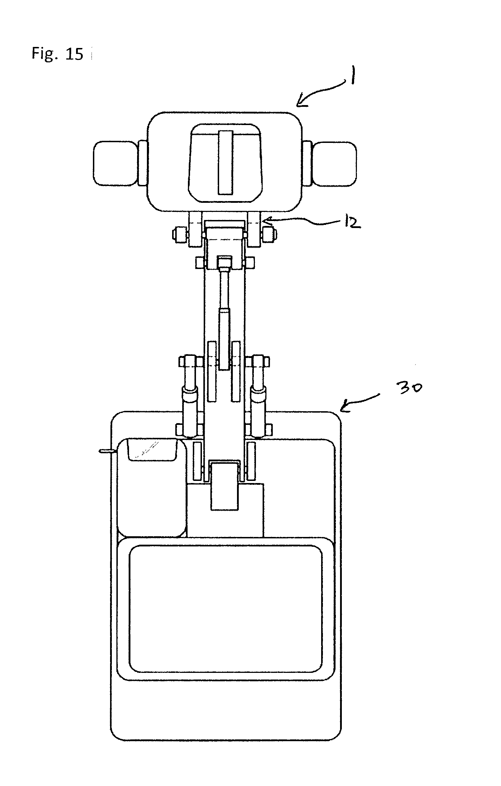

Referring next to FIGS.13 to 15, a method for coupling the robot 1 to a safety vehicle 30, not to the safety cable 500 will be described.

The robot 1 has a safety vehicle connector 12 disposed on the body thereof, to which a part of heavy equipment such as a fork crane is connected (wherein the detailed description is avoided). At this time, the safety vehicle connector 12 is located freely on the back, hip, or shoulders of the robot 1.

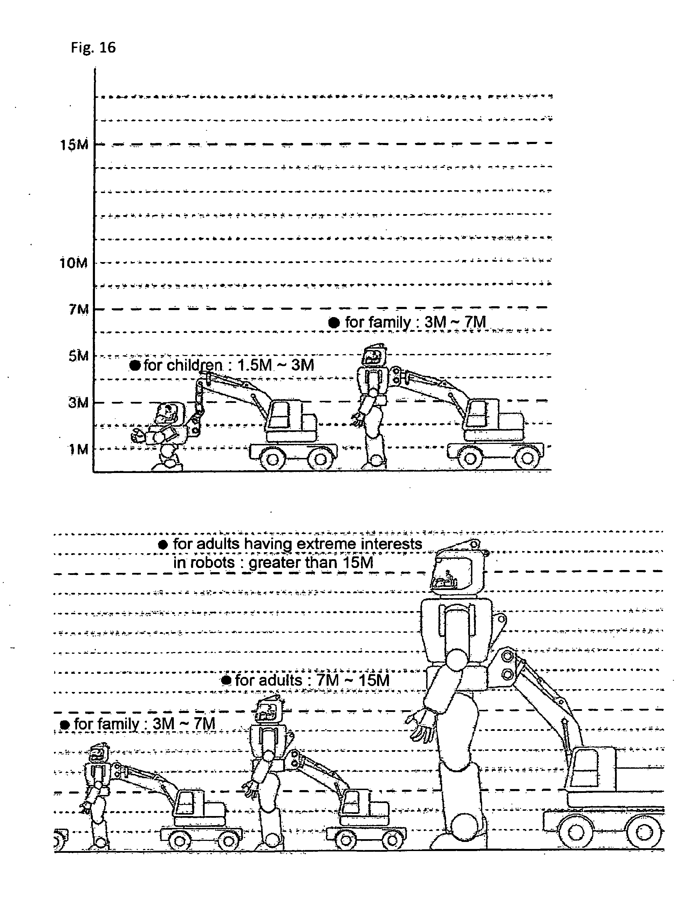

As shown in FIG.16, next, the height of the robot 1 is varied in accordance with the tendency and ages of the riders boarding the robot 1.

That is, in case of the robot for children, it has a height in a range of 1.5m to 3m, so that they can enjoy riding without a mental burden and the riding for one child is possible.

In case of the robot for family members including children, adults and old people, it has a height in a range of 3m to 7m is provided, so that the entire family members can enjoy riding.

In case of the robot for adults over middle school students, it has a height in a range of 7m to 15m, so that they can enjoy riding with much excitement and thrill. Also, in case of the robot for adults having extreme interests in robots, it has a height greater than 15m, so that they can enjoy riding with extreme excitement and thrill.

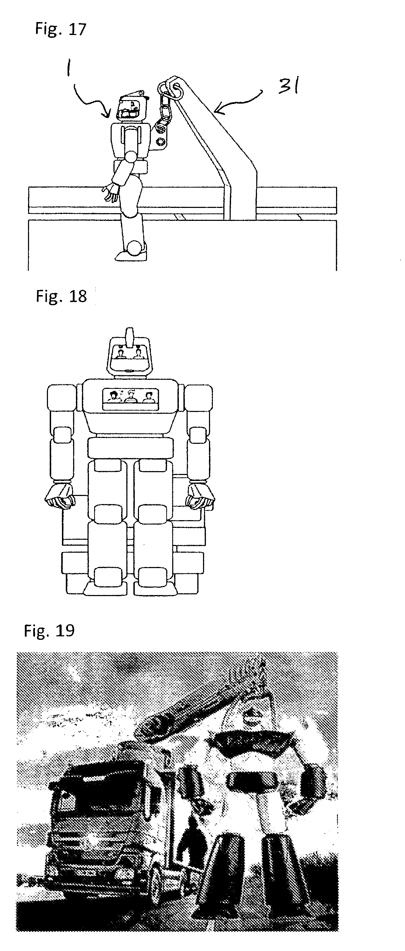

Referring next to FIG.17, a method for coupling the robot 1 to the safety vehicle located on underground rails will be described. In this method, the safety cable or the safety vehicle helping the safe bipedal walking of the robot 1 is located under the ground, and it is not exposed to the outside, thereby enhancing the visual effects.

As shown in FIG.18, next, the seats for riders are additionally provided into the body of the robot 1, especially, into the front portion of the chest, thereby increasing the number of riders for the robot 1.

Next, FIG.19 is an air view showing an example wherein the robot 1 is coupled to the safety vehicle.

### [Mode for Invention]

According to the present invention, as shown in FIGS.1, 13, 16 and 17, the large bipedal walking robot 1 is provided with the safety cable, safety vehicle, and rail type safety vehicle, so as to keep the balance of the robot 1, such that in any case, the robot 1 does not fall down to ensure perfect safety in the movements of the robot 1.

### [Industrial Applicability]

According to the present invention, there is provided the large bipedal walking robot that a human can directly board and ride and that can be utilized as an amusement park ride, wherein the robot can walk, run and fly with the connection of a safety device, thereby providing the effects of really experiencing the ride like a roller coaster and also providing entertainment effects obtained through the experience of beating villain robots.

With the development of computer graphic, especially, various robot movies appear with the real-like pictures, and the technologies of the bipedal walking robots such as humanoid robots 'Asimo' and 'Hubo' have been developed, so that many interests on the robots have been shown recently.

In this case, a theme park, 'Robot Land" is being constructed by Incheon and Masan cities according to national promoting business in Korea. Therefore, the invention gives experiences of really seeing and directly boarding the large bipedal walking robots, thereby providing new exciting amusement park rides to riders and improving their imagination on the robots.

Additionally, the invention provides fun and theme different from existing amusement park instruments, thereby having differential advantages when compared with the existing amusement park instruments and giving industrial attraction to the amusement park having the robot and ride system installed therein.
While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A large rideable bipedal walking robot comprising:
a space portion in which seats for riders are arranged;
a safety cable connected to the robot so as to prevent the robot from falling down;
a safety rail moving wheel and a safety rail part adapted to help the safety cable move along the movements of the robot;
connection arms adapted to connect the robot to a roller coaster for amusement parks;
a roller coaster moving vehicle adapted to allow the robot connected to the roller coaster to fly;
a tunnel adapted to provide special effects making theme experiences during the robot is passed therethrough;
a large sized speaker mounted inside the body (or a head) of the robot so as to talk to the riders and generate sounds therefrom; and
headlights mounted on the head of the robot so as to look like the eyes of the robot.

2. The large rideable bipedal walking robot according to claim 1, wherein instead of the space portion for the seats for riders, a boarding vehicle is provided in such a manner as to enter the internal space of the robot and to be coupled safely to the robot.

3. The large rideable bipedal walking robot according to claim 1, wherein the robot walks or runs by himself by utilizing the artificial intelligence thereof or by means of the manipulation of a pilot in the robot.

4. A safety system for a large rideable bipedal walking robot, comprising:
a safety cable connected to a predetermined portion like a head of the robot so as to prevent the robot from colliding directly against the ground when the robot falls down, the safety cable being designed to such a length that it is possible to prevent the head of the robot from colliding directly against the ground, that is, a length obtained by subtracting the length (having two times of the head length of the robot) of the portion of the robot to be protected from the height (from the ground) of the installation of a safety rail moving wheel;
the safety rail moving wheel adapted to allow the safety cable to move along the robot; and
a safety cable rotary shaft adapted to prevent the safety cable from twisting.

5. An amusement park system using a large rideable bipedal walking robot comprising a roller coaster adapted to be connected to the robot by means of a roller coaster moving vehicle, thereby allowing the robot to be operated like the roller coaster.

6. An amusement park system using a large rideable bipedal walking robot comprising a tunnel having a variety of special effects devices and a safety rail part provided, through which the robot is passed.

7. The large rideable bipedal walking robot according to claim 1, wherein the large sized speaker are mounted inside the head and body of the robot so as to talk to the riders and generate sounds therefrom.

8. The large rideable bipedal walking robot according to claim 1, wherein so as to prevent the robot from falling down and to allow the robot to walk and operate safely, a safety vehicle is adapted to be connected to a predetermined portion of a body like back, hip, shoulders of the robot in such a manner as to be operated together with the robot and to keep the balance of the robot, and connection means is mounted on the predetermined portion of the body of the robot so as to connect the robot to the safety vehicle.

9. The large rideable bipedal walking robot according to claim 8, wherein so as to prevent the robot from falling down and to allow the robot to walk and operate safely, a safety vehicle is adapted to be connected to a predetermined portion of a body like back, hip, shoulders of the robot in such a manner as to be operated together with the robot, and the safety vehicle has a weight heavier by at least 1.5 times than the robot, so that in any case, the robot does not fall down by the weight of the safety vehicle itself.

10. The large rideable bipedal walking robot according to claim 1, wherein the height of the robot up to the boarding space of the head thereof at the time when the robot is erected is varied within the ranges set in accordance with the ages and tendency of the riders.

11. The large rideable bipedal walking robot according to claim 10, wherein in case of the set range of the robot for children, the robot has a height in a range of 1.5m to 3m; in case of the set range of the robot for family members including children, adults and old people, the robot has a height in a range of 3m to 7m; in case of the set range of the robot for adults over middle school students, the robot has a height in a range of 7m to 15m; and in case of the set range of the robot for adults having extreme interests in robots, the robot has a height greater than 15m.

12. The large rideable bipedal walking robot according to claim 1, further comprising an electric actuator used for industrial robots or a hydraulic actuator adapted to allow the articulations of the large-sized robot to be moved.
